Europäisches Patentamt

European Patent Office  (11) Publication number: **0 035 344** A2

Office européen des brevets

(19)

(12) **EUROPEAN PATENT APPLICATION**

(21) Application number: 81300658.2

(22) Date of filing: 18.02.81

(51) Int. Cl.³: **B 01 D 1/20**, B 05 B 3/12

(30) Priority: 29.02.80 DK 880/80

(43) Date of publication of application: 09.09.81
Bulletin 81/36

(84) Designated Contracting States: **AT BE CH DE FR GB LI NL SE**

(71) Applicant: **A/S NIRO ATOMIZER, No. 305 Gladsaxevej, DK-2860 Soborg (DK)**

(72) Inventor: **Lund, Björn, No. 10 Höffmeyersvej, DK-2000 Copenhagen F (DK)**
Inventor: **Möller, Aage, No. 9 O.B. Muusvej, DK-3520 Farum (DK)**

(74) Representative: **Westwood, Edgar Bruce et al, STEVENS, HEWLETT & PERKINS 5, Quality Court Chancery Lane, London WC2A 1HZ (GB)**

(54) Method and spray drying apparatus for atomizing liquid material.

(57) In a spray drying apparatus comprising a rotating atomizer wheel (1) and an overlying stationary liquid distributor, the risk of deposition of dried liquid particles in the region between the edge of a central aperture (7) in a cover (5) for the atomizer wheel (1) and a part (7) of the liquid distributor projecting thereinto is removed or reduced to a considerable extent by supplying to said region an amount of liquid which is small relative to the supplied amount of liquid to be atomized. Adjacent to the liquid distributor, at least one passage (20) is provided for supplying said amount of liquid with its outlet opposite the atomizer wheel cover (5). The passage outlet (20) may either be positioned at a greater radial distance from the wheel axis than the supply passages (17) in the liquid distributor for the liquid to be atomized, so that the supply of said amount of liquid possibly together with supply of compressed air takes place in atomized form, or said passage may be constituted by an annular slit limited by a funnel enclosing said part of the liquid distributor, whereby the supply of said amount of liquid results in continuous rinsing of the parts exposed to deposit formation.

Method and arrangement for preventing undesired deposition of dried liquid particles in the region between a rotating atomizer wheel and an adjacent part of a stationary liquid distributor in a spray drying apparatus.

The present invention relates to a method for preventing undesired deposition of dried liquid particles in the region between a rotating atomizer wheel and an adjacent part of a stationary liquid distributor in a spray drying apparatus, particularly in the region between the edge of a central aperture in a cover for the atomizer wheel and a part of the liquid distributor projecting into said aperture.

BACKGROUND OF THE INVENTION

Depositions of this kind occur particularly on the part of a stationary liquid distributor projecting into the atomizer wheel through a central aperture in a cover for the wheel opposite the edge of said aperture as a result of upwards splashing of the material to be atomized, which is supplied in liquid form and hits the internal wall surfaces and bottom of the atomizer wheel with a relatively great velocity. Moreover, such depositions may occur as a result of suction of the drying gas supplied around the atomizer wheel due to the fan action of the wheel. Such a suction of drying gas will also aggravate the tendency to incrustation of the deposits. The problem is particularly pronounced in case of atomization of materials showing a strong tendency to film formation, but may occur in most spray drying processes operating with hot air drying.

It is known from the specifications of Danish patent No. 85301 and US patent No. 2,889,873 to attempt to avoid the tendency to incrustation by preventing evaporation in places where such a tendency occurs through maintenance of a gas atmosphere having such a content of volatile constituents of the same kind as in the material to be

2

atomized that the partial vapour pressure of said volatile constituents will be equal to or greater than the
partial vapour pressure of the corresponding constituents
by evaporation thereof from the liquid to be atomized.

The practical performance of this known method requires supply of a considerable amount of water vapour
which is disadvantageous for economical reasons, on one
hand, and implies a considerable risk, on the other hand,
for water condensation in the transmission connected
with the atomizer wheel as a result of ascending vapour.

Moreover, in an apparatus for carrying out this
prior art method, it has been attempted to reduce the
suction of the air around the atomizer wheel by minimizing the clearance between the wheel and an overlying stationary cover, but practical circumstances will set a
lower limit, of course, for this clearance out of consideration to free movement of the atomizer wheel.

Furthermore, it is known from the specification of
British patent No. 760,660 to attempt to reduce or eliminate the suction of drying gas by supplying an inactive
gas under pressure in addition to minimizing the clearance between the wheel and the overlying stationary part,
so that an overpressure is created in the space between
the atomizer wheel and the stationary part. For the same
purpose, it is known from the specification of German
patent No. 329,056 to direct a secondary air flow to
places, where a risk of underpressure exists. These known
methods are not sufficient to prevent the undesired drying of liquid particles splashed upwardly between the
external wall of the liquid distributor and the edge of
the central aperture of the wheel cover from the interi-
or of the atomizer wheel.

The same applies to a method disclosed in the specifications of US patent No. 2,644,516 and 2,696,878, by
which cooling water is only supplied to the liquid di-

3

stributor of an atomizer wheel through a separate emergency channel with an associated controlled valve in case of blocking of the supply channel for a feed slurry. By this emergency measure the amount of water must be rather great so that a risk will exist for the above mentioned water condensation in the transmission connected with the atomizer wheel and, moreover, precautions must be taken to protect the outlet of the separate water supply channel against blocking by deposition of dried material.

From the specification of US patent No. 4,149,836 an apparatus is furthermore known for the production of sulfur in particulate form by atomization of sulfur which is supplied in a melted state to an atomizer wheel on the upper and undersides of which fan devices acting as centrifugal blowers are provided. By adding a relatively small amount of water to the inlet air flow of each of said centrifugal fan devices, the air flows produced by said fans are supersaturated with water vapour in order to rapidly cool the atomized sulfur ejected from the wheel. Melted sulfur is supplied to the atomizer wheel through a pipe which is surrounded with a great clearance by a conical hood enclosed by the centrifugal fan device positioned at the upper side of the wheel, so that the amount of water evaporates and is incorporated to a full extent into the inlet air flow for said fan, whereby it is conveyed with the amount of air transported by the fan in radial directions out of the wheel and may serve only cooling purposes.

SUMMARY OF THE INVENTION

It is the object of the invention to avoid the above mentioned disadvantages, so that the undesired drying of upwardly splashed liquid particles and the incrustation connected therewith which, in the worst case, may destroy the balance of the atomizer wheel, is completely avoided in an inexpensive and simple way.

4

In order to achieve this the method according to the invention is characterized in that an amount of liquid which is small relative to the amount of liquid material supplied to said wheel to be atomized, is continuously suplied to said region.

In one way of performing the method, said small amount of liquid may be supplied at places, the radial distance of which from the axis of the atomizer wheel is greater than that of said region. In this case, the small amount of liquid will cause a continuous humidification of the surrounding air sucked in by the atomizer wheel. Particularly in case of drying gases having a high temperature, an improved effect may be obtained by this performance, if an amount of air is supplied together with the amount of liquid.

However, as another possibility, the amount of liquid may be supplied directly to the critical region, where the tendency to deposition occurs, and will, thereby, effect a continuous rinsing of the exposed stationary wall parts, for example the liquid distributor.

By experimental performance of the method according to the invention, good results have been achieved by supplying an amount of liquid less than 3 percent of the amount of material to be atomized supplied per unit of time.

Moreover, according to the invention, an arrangement for use in a spray drying apparatus for carrying out the method, said apparatus comprising a rotating atomizer wheel having a cover with a central aperture and a stationary liquid distributor with supply passages for the material to be atomized, part of which distributor projects into said central aperture, is characterized in that at least one passage for continuous supply of an amount of liquid which is small relative to the amount of liquid material supplied to said wheel to be atomized is

5

provided adjacent to said liquid distributor with its outlet positioned opposite said wheel cover.

BRIEF DESCRIPTION OF THE DRAWINGS

In the following, the invention will be explained in further detail with reference to the schematical drawings, in which

Fig. 1 is an axial sectional view of an atomizer wheel with an associated liquid distributor of a first embodiment for carrying out the method according to the invention;

Fig. 2 is a partial axial sectional view of an atomizer wheel with an associated liquid distributor representing another embodiment for carrying out the method; and

Fig. 3 is a section of the apparatus shown in Fig.2 viewed from above.

DETAILED DESCRIPTION

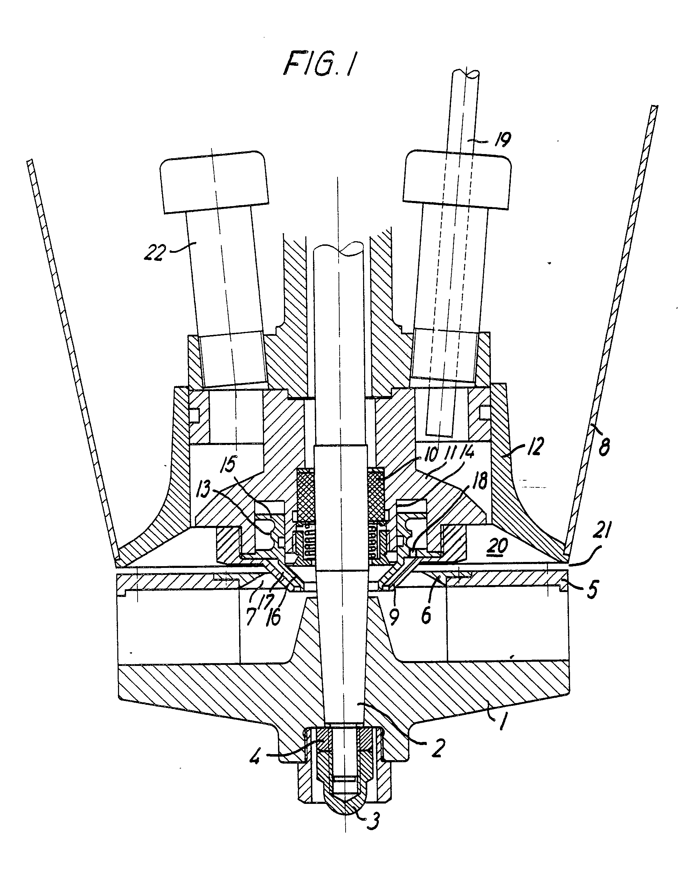

As shown in Fig. 1, an atomizer wheel 1 is fastened to the end of a shaft 2, to which the atomizer wheel is secured by means of cap nut 3 with an associated counter nut 4 screwed onto the threaded free end of the shaft. The atomizer wheel, the detailed construction os which is not shown in the figure, is upwardly closed by a cover 5, in the central part of which a collar 6 with an internal conical ring wall defines an inlet aperture 7 for the liquid to be atomized.

Above the atomizer wheel 1, a liquid distributor is arranged around the drive shaft 2 with a certain clearance relative to the cover 5, said liquid distributor being outwardly limited by a conical wall 8 and having in the bottom an annular nozzle 9 projecting some distance into the liquid inlet 7 of the atomizer wheel 1. A bearing 10 between the shaft 2 and a central support portion 11 of the liquid distributor allows rotation of the shaft 2 and, thereby, of the atomizer wheel 1 relative to the liquid distributor which is arranged stationary in a spray drying chamber with a ceiling with which the liquid distributor is connected through the conical wall 8 which is connected, on the other hand, with the mainly cylindrical side wall 12 connected with the central portion 11.

In a manner not illustrated, the liquid to be atomized is supplied to a ring channel 13 formed for this purpose in the lower part of the central portion 11 of the liquid distributor, said ring channel being defined by a collar 15 inserted into an annular groove 14 in the central portion 11 of the liquid distributor with a lower conical wall opposite the conical wall of the nozzle 9 for limiting a conical slit 17 which communicates with the ring channel 13 through a number of openings 18 in the collar 15.

According to the invention, the liquid distributor is designed to supply an amount of liquid which is small relative to the amount of liquid to be atomized to the region between the liquid distributor and the surrounding edge of the inlet aperture 7 of the atomizer wheel 1, in which region there would otherwise exist a risk of deposition of dried liquid particles. In the embodiment shown in Fig. 1, said small amount of liquid is supplied at places having a greater radial distance from the axis of the atomizer wheel than that of said region, the liquid being supplied through a tube 19 to the space between the central portion and the side wall of the liquid distributor, from which space it flows through a slit at the lower edge of the central portion to a space 20 between the side wall of the nozzle 9 screwed onto the central portion 11 and the lower conical part of the inner side of the side wall 12 opposite the cover 5 of the atomizer wheel. Since the air outside the atomizer wheel is continuously sucked into the space between the atomizer wheel cover and the liquid distributor, as indicated by an arrow 21, due to the fan action of the atomizer wheel, the amount of liquid supplied through the space 20 will cause a continuous humidification of this sucked flow of air.

In addition, in the embodiment shown, compressed air is supplied to the annular space 20 through a tube 22, whereby a stronger atomization of the supplied amount of liquid is obtained resulting in an improved action in case of spray drying processes, in particular, in which a drying gas of a high temperature is used.

The liquid supplied through the tube 19 may, for example, be water or the same kind of liquid as the volatile constituent or constituents in the material to be atomized. As further explained in the following, experiments have shown that the risk of deposition of dried liquid parts is eliminated or considerably reduced already by supply of an amount of liquid which is quite small relative to the supplied amount of liquid to be atomized, for example less that 3 percent thereof.

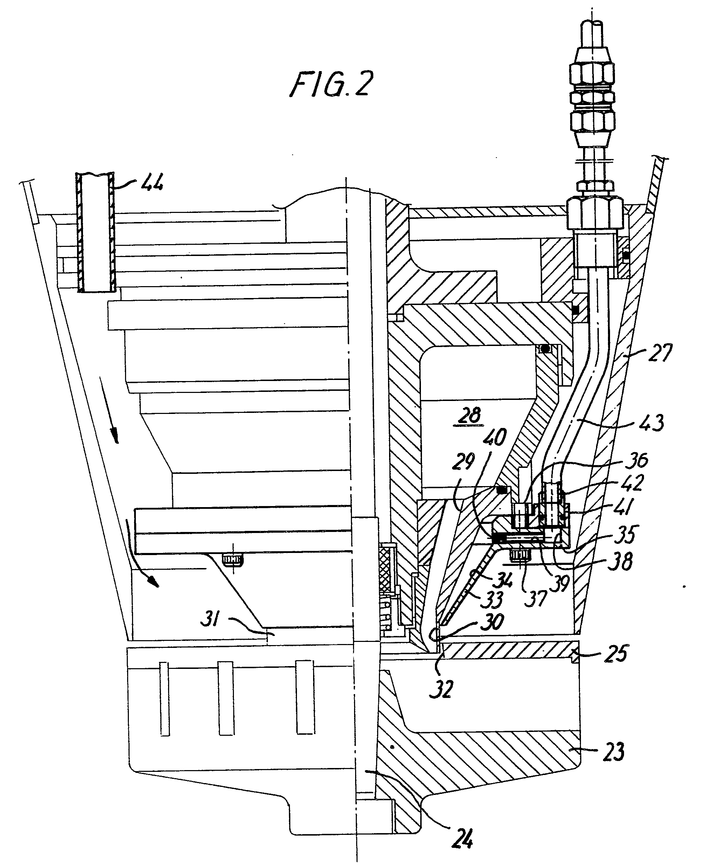

In the embodiment in Fig. 2, an atomizer wheel 23 is attached in a manner not further illustrated on the end of a shaft 24, around which a stationary liquid distributor 26 is arranged above the atomizer wheel and with a clearance relative to the cover 25 thereof, said liquid distributor being externally limited by a conical wall 27 which is firmly connected with the ceiling in the drying chamber, in which the atomizer wheel is arranged. In this case, the liquid distributor is of a type known from the specification of US patent No. 3,716,193. The liquid to be atomized is supplied in a manner not shown to an internal space 28 in the liquid distributor, from which it is supplied through a number of helical channels 29 to an annular slit 30 having its outlet in the lower part of the nozzle 31 of the liquid distributor projecting some distance into the liquid inlet 32 which

8

is formed as a central aperture in the cover 25 of the atomizer wheel.

In the embodiment in Fig. 2, a small amount of liquid is supplied directly to the region at the liquid inlet 32 and the nozzle 31 of the liquid distributor, where a risk exists for deposition of dried liquid particles by means of a funnel 33 arranged around the nozzle 31 and defining together with the external wall of the nozzle 31 an annular slit 34 which opens at the lower part of the nozzle 31 some distance above the cover 25 of the atomizer wheel.

By means of a peripheral flange 35, the funnel 33 is screwed firmly into an overlying flange portion 36 of the nozzle 31 of the liquid distributor by a number of bolts 37. The water is supplied to the annular slit 34 from a ring duct 38 formed in the flange 35 and connected with the annular slit 34 through a number of radial channels 39. At the internal end of each of these ducts 39, a nozzle 40 is inserted for achieving a suitable distribution of the supplied amount of water in the annular slit 34, the cross-sectional area of which decreases downwardly with a rather narrow outlet surrounding the lower part of the nozzle 31 of the liquid distributor.

The ring duct 38 is upwardly limited by a ring 41 arranged above the external part of the peripheral flange 35, the inner side of said ring being formed with a shoulder portion corresponding to the axial extension of the inner part of the peripheral flange 35, so as to be firmly pressed against the flange portion 36 by the nozzle 31 of the liquid distributor by tightening the bolts 37. In a single bore in the ring 41, a coupling member 42 for the end of a liquid supply tube 43 is inserted, said tube extending upwardly between the liquid distributor 26 and the inner side of the conical wall 27 and through the ceiling of the drying chamber in question by means of suitable sube fittings.

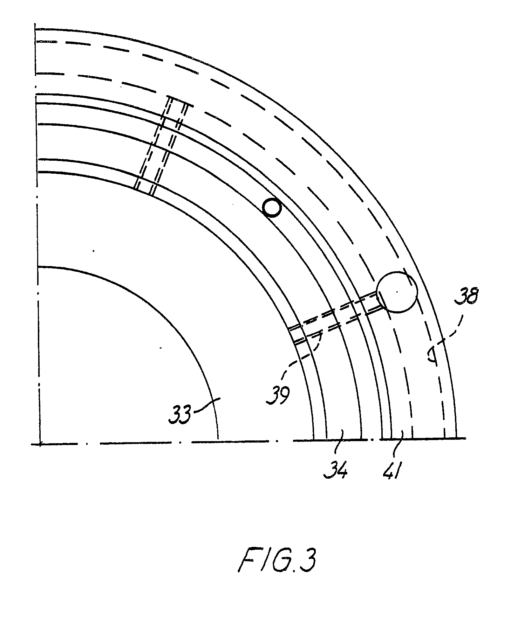

Fig. 3 shows a section of the funnel 33 with the peripheral flange 35 and the cover ring 41, viewed from above.

As a result of the fact that the liquid supply for prevention of deposition of dried liquid particles takes place by means of separate components in the form of the funnel 33 with the peripheral flange 35 and the cover ring 41 as well as the supply tube 43, the embodiment in Fig. 2 is particularly suitable for installation in connection with existing liquid distributors, since it does not require any intervention in or modifications of the interior of the liquid distributor.

In the same manner as in the embodiment in Fig. 1, the supplied liquid is preferably water, but may also be a liquid of the same volatiles as those of the material to be atomized. The amount of supplied liquid may in a similar way be quite small relative to the supplied amount of liquid to be atomized, for example less than 3 percent thereof.

Even if it is intended by the liquid supply in the embodiment in Fig. 2 to provide continuous rinsing of the exposed apparatus parts for preventing depositions of dried liquid particles, it will also in this embodiment be advantageous to supply air around the liquid distributor, such as shown schematically by a lead-in 44. As a matter of fact, thereby the underpressure which may be present in the space between the liquid distributor 26 and the conical external wall 27 due to the fan action of the atomizer wheel will be eliminated and, thereby, also the risk caused by such an underpressure for sucking half-dried particles together with drying gas into said space and deposition of such particles on the liquid distributor and the wall 27.

An apparent from the following examples, practical experiments have shown that by the invention an essential improvement in direction of elimination or considerable reduction of the risk for depositions of the kind mentioned is obtained in a simple and rather inexpensive way, which will also result in an improvement of the quality of the powder product obtained by the spray drying process.

## Example 1

Experiments were conducted in a spray drying apparatus with a cylindrical chamber having a diameter of 8.4 meters, a cylindrical height of 4.75 meters and a cone angle of $60^{\circ}$. The atomizer wheel was of a conventional design with radial ejection channels; the diameter of the wheel was 210 mms, and the rotational velocity was 14,900 r.p.m.

To the spray drying apparatus 5,600 kgs per hour fat-enriched milk with a total solids content of 60 percent were supplied together with an amount of drying gas of 52,000 kgs per hour at an inlet temperature of $200^{\circ}C$ and an outlet temperature of $93^{\circ}C$.

Certain difficulties were experienced with respect to achieving regular operation of the apparatus, since after 22 hours of operation, firm deposits occurred on the stationary liquid distributor and the adjacent parts of the atomizer wheel. Furthermore, such deposits had an adverse effect on the quality of the produced milk powder due to a high amount of scorched particles.

The apparatus was modified by installation of a system for supply of water to the atomizer wheel according to the invention, as shown in Fig. 1.

1-2 litres of water were supplied per hour. After operation periods of 22 hours, no deposits were found on the liquid distributor or the atomizer wheel, and the amounkt of scorched particles in the produced milk powder was considerably reduced.

11

## Example 2

Experiments were carried out in a spray drying apparatus with a cylindrical chamber having a diameter of 8.4 meters, a cylindrical height of 5.95 meters and a cone angle of 60°.

The atomizer wheel was of a type having curved channels and a diameter of 210 mms. The rotational velocity was 14,400 r.p.m.

To the spray drying apparatus 2,880 kgs per hour soy protein isolate with a total solids content of 14 percent were supplied together an amount of drying gas of 60,600 kgs per hour at an inlet temperature of 221°C and an outlet temperature of 107°C.

After 6 hours of operation, heavy deposits were found on the liquid distributor and the atomizer wheel.

The apparatus was modified in accordance with Fig. 2 and operation was repeated under the same conditions but with the additional supply of 50 litres of water per hour through the distributor arranged for this purpose.

After 10 hours of operation, no deposits were found neither on the atomizer wheel nor on the liquid distributor.

PATENT CLAIMS

1. A method for preventing undesired deposition of dried liquid particles in the region between a rotating atomizer wheel (1,23) and an adjacent part (9,31) of a stationary liquid distributor in a spray drying apparatus, particularly in the region between the edge of a central aperture (7,32) in a cover (5,25) for the atomizer wheel (1,23) and a part (9,31) of the liquid distributor projecting into said aperture, characterized in that an amount of liquid which is small relative to the amount of liquid material supplied to said wheel to be atomized is continuously supplied to said region.

2. A method as claimed in claim 1, characterized in that said small amount of liquid is supplied at places, the radial distance of which from the axis the atomizer wheel (5,25) is greater than that of said region.

3. A method as claimed in claim 2, characterized in that an amount of air is supplied together with said small amount of liquid.

4. A method as claimed in claim 1, characterized in that said small amount of liquid is supplied directly to said region.

5. A method as claimed in any of the preceding claims, characterized in that said small amount of liquid is less than 3 percent of the amount of liquid material to be atomized supplied per unit of time.

6. A method as claimed in any of the preceding claims, characterized in that said small amount of liquid is the same liquid as the volatile constituent of the material to be atomized.

7. An arrangement for use in a spray drying apparatus for carrying out the method claimed in any of the preceding claims, said apparatus comprising a rotating atomizer wheel (1,23) having a cover (5,25) with a central aperture (7,32) and a stationary liquid distributor (17,30) with supply passages for the material to be atomized, part of which distributor projects into said central aperture, characterized in that at least one passage (20,34) for continuous supply of an amount of liquid which is small relative to the amount of liquid material supplied to said wheel (1,23) to be atomized is provided adjacent to said liquid distributor with its outlet positioned opposite said wheel cover (7,32).

8. An arrangement as claimed in claim 7, wherein said outlet is positioned at a greater radial distance from the axis of said wheel than the outlet of any of said supply passages (17) of said liquid distributor.

9. An arrangement as claimed in claim 8, characterized in that an air supply duct (22) is provided in connection with said passage.

10. An arrangement as claimed in claim 7, characterized in that said outlet is positioned at a small separation from said wheel cover (25) with direct communication to said central aperture (32) thereof, and the part (31) of said liquid distributor projecting thereinto.

11. An arrangement as claimed in claim 10, characterized in that said passage (34) is formed by an annular slit around said projecting part (31) of the liquid distributor and is connected through a number of radial ducts (39) with an annular duct (38) positioned at a greater radial distance from the wheel axis, a supply pipe (43) for said small amount of liquid being connected with said annular duct (38).

12. An arrangement as claimed in claim 11, characterized in that said projecting part (31) of the liquid distributor has a conical external wall extending above the atomizer wheel (23) with increasing diameter in the direction away from the wheel, said annular slit (34) being limited by said conical external wall and a sur-

14

rounding funnel (33) having a cone angle such that the cross-sectional area of said annular slit (34) decreases in the direction towards said wheel cover (25).

FIG.1

FIG.2

FIG.3